# EUROPEAN PATENT APPLICATION

(11) **EP 4 541 566 A1**
(43) Date of publication of application: **23.04.2025**
(21) Application number: 23203683.0
(22) Date of filing: 16.10.2023
(51) Int. Cl.: B29C 70/46

(54) **METHOD OF EMBEDDING REINFORCING FIBER INTO THERMOPLASTIC RESIN**

(71) Applicant: Aerlyte, Inc., Petoskey, Michigan 49770 (US)
(72) Inventor: JOHNSTON, Christopher VII, Petoskey, 49770 (US)
(74) Representative: Isarpatent

(57) **Abstract**

A method of embedding a reinforcing fiber into a thermoplastic resin. The method includes providing a sealed cavity (184) enclosing a ply stack (52) and defined by first (54) and second metal members (56) and a seal (58). The ply stack (52) includes at least one thermoplastic resin ply including the thermoplastic resin and at least one reinforcing fiber ply (12) including the reinforcing fiber. The method further includes subjecting the sealed cavity (50) to a vacuum to form a vacuum-sealed cavity to impart an impregnation pressure on the ply stack. The method also includes heating the ply stack to an impregnation temperature of the thermoplastic resin to form a heated thermoplastic resin while maintaining a seal temperature of the seal below the impregnation temperature. The method further includes impregnating the heated thermoplastic resin into the reinforcing fiber to form a heated composite. The method also includes cooling the heated composite to form a thermoplastic composite.

## Description

### TECHNICAL FIELD

The present disclosure relates to a method of embedding reinforcing fiber into thermoplastic resin. The method may be used to impregnate while protecting seals used in the method from excessive thermal degradation.

### BACKGROUND

Polymeric materials (e.g., thermoplastic materials) may be formed into articles. The polymeric material may be a polymer matrix composite including reinforcing fibers. Non-limiting examples of articles formed from polymeric materials include cosmetic, exterior automotive components (e.g., hoods, fenders, decklids, roofs, bumpers, and fascia), structural automotive components (e.g., seating, bumper beams, skid plates, load floors, pickup truck cargo boxes, and bedliners), interior automotive components (e.g., cosmetic panels), construction articles, consumer articles (e.g., sporting goods and appliances), and medical articles and components.

### SUMMARY

In one embodiment, a method of embedding a reinforcing fiber into a thermoplastic resin is disclosed. The method includes providing a sealed cavity defined by first and second metal members and a seal, the sealed cavity enclosing a ply stack. The ply stack includes at least one thermoplastic resin ply including the thermoplastic resin and at least one reinforcing fiber ply including the reinforcing fiber. The method further includes subjecting the sealed cavity to a vacuum to form a vacuum-sealed cavity to impart an impregnation pressure on the ply stack. The impregnation pressure may be augmented by an external pressure (e.g., by mechanical or external means). The method also includes heating the ply stack to an impregnation temperature of the thermoplastic resin to form a heated thermoplastic resin while maintaining a seal temperature of the seal below the impregnation temperature of the thermoplastic resin. The method further includes impregnating the heated thermoplastic resin into the reinforcing fiber to form a heated composite. The method also includes cooling the heated composite to form a thermoplastic composite. The heating step may include a plurality of the vacuum cavities in an oven. The seal may be an inflatable tube, bladder, or section.

The heating step may include heating the vacuum cavity to the impregnation temperature above a glass transition temperature of the thermoplastic resin to achieve a melt volume rate of greater than 25 cm³/10 minutes according to ISO 1133-1 and measured using a test temperature equal to the impregnation temperature using a 2.16 kg nominal load. The heating step may reduce a dynamic viscosity of the heated thermoplastic resin to below 1,000 Pa-s and in some embodiments 17/735671below 500 Pa-s according to ISO 6721-10 when measured at an angular frequency of 0.01 rad/s. An ideal impregnation temperature varies depending on the specific resin. In the class of polyolefins and copolyesters, the ideal impregnation temperature may exceed 270 °C and in some embodiments may exceed 290 °C. The heating step may include heating a plurality of the vacuum-sealed cavities in an oven.

The first and second metal members may be first and second rigid metal members, respectively. The first and second metal members include first and second planar surfaces, respectively. The subjecting step includes subjecting the sealed cavity to a vacuum to form a vacuum cavity having a supported area under vacuum imparting the impregnation pressure on a surface area of the ply stack less than the supported area under vacuum to produce an intensification effect resulting from a ratio of the supported area under vacuum to the surface area of the ply stack greater than 1. The vacuum may create a pressure differential of 0.1 to 1 bar between the vacuum cavity and a region external to the vacuum cavity, and an average impregnation pressure may be proportional to the ratio multiplied by the pressure differential. The deflection of a cantilevered area of the sealed cavity during the subjecting step is supported by one or more support structures at some point during the process.

The heating step may include heating the ply stack to the impregnation temperature of the thermoplastic resin to form the heated thermoplastic resin while maintaining the seal temperature of the seal below a seal temperature limit of the seal. The impregnation temperature of the thermoplastic resin may exceed the temperature limit of the seal. The impregnation temperature may be 280 °C or higher and the seal temperature may be 260 °C or lower. The maintaining step may be carried out using active cooling. The maintaining step may be carried out using passive cooling. A temperature differential between the impregnation temperature and the seal temperature may be at least 5 °C.

The at least one thermoplastic resin ply may include a nonwoven fabric of spunbond fibers, melt-blown fibers, needle-punched fibers, wet-laid fibers, or air-laid fibers. The at least one thermoplastic resin ply may include at least one thermoplastic film. Non-limiting examples of thermoplastic resins include polyolefins, polyamides, polyesters, and copolyesters. The at least one reinforcing fiber ply may include a woven fabric, a non-crimp fabric, a non-woven fabric, or a binder stabilized fabric. The reinforcing fiber may include a fiberglass, a carbon fiber, a mineral fiber, an organic fiber, a natural fiber, or a combination thereof.

The impregnation temperature may be greater than a thermogravimetric analysis (TGA) onset temperature in air of the at least one thermoplastic resin ply using a heat rate of 0.1 °C/minute.

The impregnating step may include impregnating the heated thermoplastic resin into the reinforcing fiber to form a heated composite resulting from a height reduction between the first and second metal members of 20% to 80%.

The at least one thermoplastic resin ply includes first and second thermoplastic resin plies. The at least one reinforcing fiber ply may include first and second reinforcing fiber plies. The ply stack may include at least three alternating plies including the at least one reinforcing fiber ply and the at least one thermoplastic resin ply. The ply stack may include metal plies. In one embodiment, the top and bottom plies may be metal thereby adding stiffness or abrasion resistance or shielding qualities to the thermoplastic composite while at the same time preventing sticking of the ply stack to the members. The at least one thermoplastic resin ply may be of a family of polyolefins, polyesters, copolyesters, or polyamids. The ply stack may include at least one metal ply.

The method may further include holding at the impregnation temperature for a holding period. The holding period may be 1 to 60 minutes.

The subjecting step may include ramping up an applied vacuum during the heating step. The vacuum cavity may be subjected to a positive air pressure after a cooling cycle to open the vacuum cavity and separate the thermoplastic composite from one or both of the first and second members to remove the thermoplastic composite from the cavity.

In another embodiment, a method of embedding a reinforcing fiber into a thermoplastic resin is disclosed. The method includes providing a sealed cavity defined by first and second metal members and a seal, the sealed cavity enclosing a thermoplastic prepreg partially impregnating the reinforcing fiber with the thermoplastic resin. The method further includes subjecting the sealed cavity to a vacuum to form a vacuum cavity to impart an impregnation pressure on the thermoplastic prepreg. The method also includes heating the thermoplastic prepreg to an impregnation temperature of the thermoplastic resin to form a heated thermoplastic resin while maintaining a seal temperature of the seal below the impregnation temperature of the thermoplastic resin. The method also includes impregnating the heated thermoplastic resin into the reinforcing fiber to form a heated composite. The method also includes cooling the heated composite to form a thermoplastic composite.

### BRIEF DESCRIPTION OF THE DRAWINGS

Figure 1 depicts a top view of a cavity enclosing a ply stack.
Figure 2 depicts a cross sectional view of the cavity and the ply stack of Figure 1 taken along line 2-2 of Figure 1.
Figure 3 depicts a top view of a cavity enclosing a ply stack including a core material.
Figure 4 depicts a cross sectional view of the cavity and ply stack including a core material of Figure 3 taken along 4-4 of Figure 1.
Figure 5A depicts a partial cross sectional view and a partial end view of a bellowed seal.
Figure 5B depicts a partial cross sectional view and a partial end view of an alternative bellowed seal.
Figure 6 depicts a partial cross sectional view and a partial end view of an inflatable seal.
Figure 7 depicts a perspective view of a rack supporting cavities.
Figure 8 depicts a perspective view of the rack of Figure 7 placed in an oven.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

As used herein, the term "substantially," "generally," or "about" means that the amount or value in question may be the specific value designated or some other value in its neighborhood. It may be implied that the specific value designated is modified by the term "about." The term "about" denoting a certain value is intended to denote a range within ± 5% of the value. As one example, the phrase "about 100" denotes a range of 100 ± 5 (i.e., a range of 95 to 105). The term "substantially" may modify a value or relative characteristic disclosed or claimed in the present disclosure. In such instances, "substantially" may signify that the value or relative characteristic it modifies is within ± 0%, 0.1%, 0.5%, 1%, 2%, 3%, 4%, 5% or 10% of the value or relative characteristic.

Integer ranges may include all intervening integers. For example, the integer range of 1 to 10 includes 1, 2, 3, 4, 5, 6, 7, 8, 9, and 10. Similarly, the range 1 to 100 includes 1, 2, 3, 4, .... 97, 98, 99, and 100. Intervening numbers that are increments of the difference between the upper limit and the lower limit divided by 10 (or number of a magnitude of 10) may be taken as alternative upper or lower limits. For example, if the range is 1.1 to 2.1, the following numbers 1.2, 1.3, 1.4, 1.5, 1.6, 1.7, 1.8, 1.9, and 2.0 can be selected as lower or upper limits.

Fiber-reinforced thermoplastic composites may generally include a thermoplastic resin and a reinforcing fiber. In many cases, the resin and the reinforcing fiber have different properties, such that when these components are combined, the resulting fiber-reinforced composite has properties intermediate the resin and the reinforcing fiber. For example, the resin may be relatively low strength but may have relatively high elongation properties, while the reinforcing fiber may be relatively high strength but may be relatively brittle. A part derived from a composite material may have a strength greater than the resin while also being relatively tougher compared to the reinforcing fiber.

Thermoplastic composite sheets are an intermediate material format in which the reinforcing fibers are preimpregnated by a matrix resin and manufactured in a sheet format for further conversion into parts. Common parlance for such materials includes glass mat thermoplastics (GMT), which typically include chopped, randomly oriented reinforcing fibers also described as nonwoven fabric sometimes combined with continuous reinforcing fibers in a woven or stitched fabric format, organosheet which typically denotes sheets constructed with continuous reinforcing fibers in a woven or stitched fabric format, tape-based laminates produced using unidirectional (UD), continuous-fiber composite tapes often assembled into multi-ply formats with tailored fiber orientations in each ply, and thermoplastic prepreg, a term borrowed from the thermoset composites industry and applied loosely to denote a pre-impregnated, intermediate composite format.

The term prepreg traditionally applies to intermediate material formats of monomer and pre-polymer thermosetting resins that either partially or completely impregnate reinforcing fibers in continuous UD or fabric formats and retain their pliability until cured. Thermosetting resins often exhibit rheological behavior significantly different than already polymerized thermoplastic resins, especially in terms of their ability to reach very low viscosities at temperatures well below their cure temperature after which they undergo an irreversible polymerization process often initiated by light or heat often with a catalyst into a rigid polymer.

Thermoplastic composite sheets are typically mass produced using a variety of methods. Both GMT and organosheet formats are typically produced using double belt presses (DBP) where a combination of reinforcing fibers in a fabric format are combined with a thermoplastic resin delivered in a film format or as a melt directly from a film die. This ply stack is delivered into a DBP on a continuous basis from rolls of fabric that are replenished. The DBP operates at a certain speed controlled by the thickness of the laminate to be produced, the thermoplastic resin being applied, the temperature and pressure of the belt, the permeability of the fabric, and the time to achieve an adequate level of impregnation. Often these DBPs represent a significant investment that can only be justified by significant demand and continuous operation and often preclude the end user of such products from integrating such a process into their own operations. In addition, the investment and the cost of operation requires significant pressure to accelerate impregnation and to maximize throughput. Also, the width of the line is a limiting factor and cannot be expanded beyond its original width. Larger sizes of formats of interest such as two (2) meters are not currently available in the market and thicknesses above a few millimeters are impractical to produce cost-effectively. As it is impractical to operate such a line under vacuum conditions, the raw materials are exposed to ambient conditions such as air that may contribute to oxidation thereby limiting the temperature to which a specific resin can be heated.

An alternative batch method for producing composite sheets is a type of stack molding where individual ply stacks of resin in a film format are assembled with fabrics of reinforcing fibers in specific sizes and placed between plates or platens within a press. Often, such processes are designed to accommodate multiple ply stacks at the same time by providing a multitude of platens. Pressure is applied to the ply stacks by the press and heat through the platens or a heated enclosure. Although vacuum may be applied to the ambient conditions within the entire enclosure, pressure is derived solely from the press and the economics of the process necessitate higher pressures to accelerate impregnation. Larger sheet sizes drive press tonnage and cost. Higher thicknesses significantly reduce throughput and increase cost.

The melt-impregnation of UD tapes offers another means for producing composite sheets of pultruding fiber in a continuous roving, yarn, or tow format through a die through which the heated thermoplastic resin is applied and impregnated into the fiber and cooled. These tapes are then assembled by a variety of means into a multi-ply laminate and consolidated. Consolidation is a term for transforming plies or sheets of thermoplastic composites sheets which have been pre-impregnated, into a solid laminate. The variety of means include DBPs, autoclaves (vacuum bagging), and hot presses. The capital investment for the entire conversion process is significant and beyond the means of most customers of such composite sheets to adopt internally.

Considering the foregoing, what is needed is an ability for a converter of composite sheets to produce their own sheets cost-effectively, independent of sheet size and thickness. One or more methods disclosed herein decouple the impregnation process from expensive equipment utilized by other processes to apply pressure.

Impregnation is a process that requires time, temperature, and pressure. One or more methods disclosed herein demonstrate that a vacuum can solely be used to generate sufficient pressure to produce thermoplastic composite sheets given sufficient time for impregnation and temperature to achieve a low enough viscosity. Current processes for impregnating reinforcing fabrics with thermoplastic resins may utilize equipment (e.g., hydraulic presses, DBPs, or autoclaves) representing expensive capital investments. One or more methods disclosed herein utilize vacuum alone between two members to develop pressure for impregnation. As the pressure developed is relatively low (e.g., 0.1 to 2 bar), a lower viscosity of the resin is achieved at relatively higher processing temperatures (e.g., 250 °C or higher), which may not be used in certain conventional processes as the higher processing temperatures may cause oxidation of resins such as polypropylene. Conventional processes operating under higher pressures from external sources such as double belt presses, hydraulic presses, or autoclaves may cause excessive resin flow at such low viscosities resulting in resin wash where the position of the reinforcing fibers is disturbed or excessive flow of resin away from the ply stack is caused.

One or more methods disclosed herein may provide a relatively low-cost process to batch process multiple ply stacks under vacuum within an oven enclosing a rack including supports for supporting ply stacks. The batch process may perform impregnation on all the supported ply stacks within a relatively short period of time (e.g., 30 minutes to 3 hours). The batch process provides the capability to produce composite sheets using reinforcing fibers in larger formats than provided for using existing infrastructure and systems and at lower volumes than could be economical with traditional, capital-intensive processes.

For one or more reasons, conventional vacuum bagging processes cannot achieve one or more results of one or more methods disclosed herein. Conventional vacuum bagging processes can be used to form parts by curing thermoset resins that are not completely polymerized. A low viscosity liquid may be infused at temperatures below the final glass transition of the cured resin into a dry stack of reinforcing fibers applied over a mold in the shape of a part under a sealed flexible member also called a membrane or bag applying vacuum and then curing under heat. Prepregs in which the reinforcing fibers have already been partially or completely impregnated by the thermoset resin may be applied to a mold in the shape of a part under a sealed membrane and consolidated under a pressure differential and heated until cured. Any subsequent impregnation as the viscosity of the thermoset resin is lowered through heat below the glass transition temperature of the cured polymer. One or more of the impregnation methods described herein take place at temperatures above the glass transition temperatures of the polymer.

The curing process for conventional vacuum bagging processes is not reversible as with thermoset resins. Accordingly, conventional vacuum bagging processes are not used to make composite sheets that can be subsequently formed into shaped parts. Vacuum bagging uses an elevated temperature that reduces viscosity immediately followed by curing by polymerization of a thermoset resin. The polymerization renders the thermoset resin into an irreversible, rigid state. Vacuum bagging does not use an elevated temperature in the context of a reversible reduction in viscosity without curing. The elevated temperature used in vacuum bagging processes is within the normal processing window of the thermoset resin. Vacuum bagging processes are not used with highly elevated temperatures to reach low viscosities for impregnation. Conventional vacuum bagging applies a three-dimensional mold (e.g., a rigid tool surface) and a flexible membrane. Vacuum bagging processes do not use a pair of planar, rigid surfaces to produce an intermediate format. Vacuum bagging uses prepreg where the fiber reinforcement is partially or completely impregnated by the resin prior to the vacuum bagging process. Vacuum bagging is not used with individual plies of resin and dry reinforcing fibers. When vacuum bagging is applied, an intensification effect from the vacuum alone is not achieved as the membrane is incapable of supporting the pressure differential and collapses upon the material or opposing surface. Rather, the resultant pressure on the material is exactly the pressure differential created between the vacuum and ambient conditions. Higher pressures are only a result of increasing ambient pressure via an autoclave.

For one or more reasons, conventional thermoplastic film stacking cannot achieve one or more of the results of one or more methods disclosed herein. Conventional thermoplastic film stacking combines individual plies of resin and reinforcing fabric between two unsealed heated platens or a double belt press open to the atmosphere. The only vacuum formed may be outside the heated platens. Moreover, the pressure created by this system is solely from a press force applied to the platens. In matched mold processes, the higher pressures produced are a product of a press used by the matched molds. In a lamination process, plies of resin in a melt, film, or powder format are combined with plies of reinforcing fabric under the heat and pressure of a continuous operating double belt press. Such a process cannot isolate resin from atmospheric oxygen and therefore operates at a relatively lower temperature and a relatively higher pressure due to higher viscosities.

As disclosed herein, a method of embedding a reinforcing fiber into a thermoplastic resin is disclosed. The method includes the step of providing a sealed cavity defined by first and second metal members and a seal, and the sealed cavity enclosing a ply stack. The ply stack includes at least one thermoplastic resin ply including the thermoplastic resin and at least one reinforcing fiber ply including the reinforcing fiber. The method further includes subjecting the cavity to a vacuum to form a vacuum cavity to impart an impregnation pressure on the ply stack. The method also includes heating the ply stack to an impregnation temperature of the thermoplastic resin to form a heated thermoplastic resin while maintaining a seal temperature of the seal below the impregnation temperature of the thermoplastic resin. The method further includes impregnating the heated thermoplastic resin into the reinforcing fiber to form a heated composite (e.g., a heated composite sheet). The method further includes cooling the heated composite to form a thermoplastic composite. Demolding or decoupling of the thermoplastic composite may include the introduction of positive air pressure into the vacuum sealed cavity to reverse the pressure differential and separate the two members from the thermoplastic composite. The thermoplastic composite may be a thermoplastic composite sheet. The thermoplastic composite sheet may be a flat or planar sheet. However, the thermoplastic composite sheet may include slight curves and/or minor geometries to accommodate functional and/or aesthetic design features.

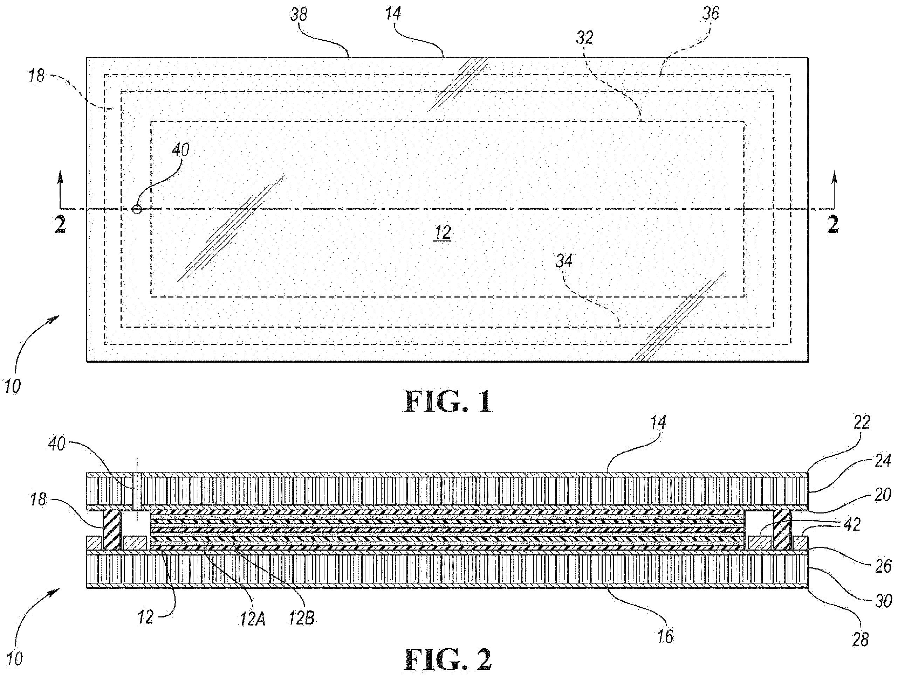

Figures 1 and 2 depict cavity 10 enclosing ply stack 12. Cavity 10 includes first member 14 formed of a first rigid, planar member, second member 16 formed of a second, rigid planar member, and seal 18 formed of a sealing material. Second member 16 may have a larger perimeter than first member 14 to form a ledge configured to help to mechanically grasp and move cavity 10. Non-limiting examples of sealing materials include suction cups, elastomers, rubber, compressible materials, foams, bellows, and inflatable shapes. Seal 18 may be adhesively applied to first member 14 or second member 16. First member 14 includes inner skin 20, outer skin 22, and core material 24 extending between inner skin 20 and outer skin 22. Inner skin 20 and outer skin 22 may be formed of a metal material. Core material 24 may be formed of a honeycomb core material. Second member 16 includes inner skin 26, outer skin 28, and core material 30 extending between inner skin 26 and outer skin 28. Inner skin 26 and outer skin 28 may be formed of a metal material. Core material 30 may be formed of a honeycomb core material. A member skin may be formed of a metal material (e.g., steel, aluminum, or a nickel-iron alloy such as Invar). A member core may be formed of a honeycomb core material (e.g., steel, aluminum, or a nickel-iron alloy such as Invar). Core materials 24 and 30 are configured to reduce the amount of heat for elevating the temperature of first member 14 and second member 16 relative to first member 14 and second member 16 formed of a monolithic metal or glass material. As alternatively disclosed, the first and second members may be formed of a monolithic metal material in which the members have less thickness than the first and second members having core materials. A member skin may have a thickness of 0.5 to 5 millimeters. A member core may have a thickness of 5 to 100 millimeters. The overall thickness of a member may be 5 to over 100 millimeters. Ply stack 12 may have a width of 0.1 to 5.0 meters. Ply stack 12 may have a length of 0.1 to 5.0 meters. Ply stack 12 may have a thickness of 0.25 to 100 millimeters.

As shown in Figure 2, ply stack 12 includes five (5) plies of ply 12A and four (4) plies of ply 12B of thermoplastic resin plies formed of a thermoplastic resin and reinforcing fiber plies formed of a reinforcing fiber, respectively. The total number of total plies may be from 2 to more than 400 plies. More than one ply of the thermoplastic resin or the reinforcing fiber may be disposed between adjacent plies of the reinforcing fiber or thermoplastic plies. The layering sequence may be one thermoplastic resin ply, two reinforcing fiber plies, one thermoplastic resin ply, two reinforcing fiber plies, and so on and so forth.

The thermoplastic resin ply may include a nonwoven fabric. The nonwoven fabric may be spunbond fibers, melt-blown fibers, needle-punched fibers, wet-laid fibers, or air-laid fibers. Spunbond fibers may be produced using a continuous process of spinning fibers and dispersing the spun fibers (e.g., via an air stream) into a webbed deflector and onto a belt. Melt-blown fibers may be produced by blowing a heated polymer emerging from orifices into a fine fiber strand via hot and high velocity air. Spunbond and melt-blown formats may operate within a wider range of melt flows (e.g., greater than 10 cc/10 min) than film formats, which typically require higher melt strengths for processing into films. Higher melt-flow resins often exhibit poor melt strengths or require special formulations that can add to cost. As higher melt-flow resins also exhibit lower viscosities, they better facilitate impregnation, especially at relatively lower pressures as set forth in one or more methods disclosed herein. Needle-punched fibers may be produced from a fibrous web (e.g., a carded web) repeatedly penetrated with fine needle barbs and subsequently bonded together through fiber entanglement. Wet-laid fibers may be produced by suspending staple fibers, which optionally are mixed with viscose and/or wood pulp to form a water-fiber/pulp dispersion continuously deposited on a forming wire. Air-laid fibers may be produced by forming a fiber web by mixing fibers with air to form a uniform air-fiber mixture subsequently deposited on a moving air-permeable belt or wire.

The thermoplastic resin ply may be formed of a thermoplastic film. The reinforcing ply may include a woven fabric, a non-crimp fabric, a non-woven fabric, or a binder stabilized fabric. The reinforcing ply may include fiberglass, a carbon fiber, a mineral fiber, an organic fiber, a natural fiber, or a combination thereof. The thickness of individual thermoplastic resin plies may be 0.01 to 1.0 millimeters. The thickness of individual reinforcing plies may be 0.01 to 1.0 millimeters.

The individual plies of ply stack 12 may be cut on a cutting table and laid up. Once laid up, ply stack 12 may be placed on inner skin 26 of second member 16 before or after seal 18 is placed on inner skin 26 of second member 16. After ply stack 12 and seal 18 are placed on inner skin 26 of second member 16, first member 14 is placed thereupon such that inner skin 20 of first member 14 contacts seal 18 and ply stack 12 thereby forming cavity 10. The width of seal 18 once cavity 10 is formed may be 5 to 100 millimeters depending upon the seal profile, sealing method, and height of the ply stack. The height of seal 18 once cavity 10 is formed may be 0.25 to 100 millimeters. The thickness of ply stack 12 once cavity 10 is formed may be 0.25 to 100 millimeters.

As shown in Figure 1, ply stack 12 has ply stack perimeter 32, seal 18 has inner perimeter 34 and outer perimeter 36, and first member 14 and second member 16 have member perimeter 38. Seal 18 is situated inward of member perimeter 38 of cavity 10 and at an inward dimension.

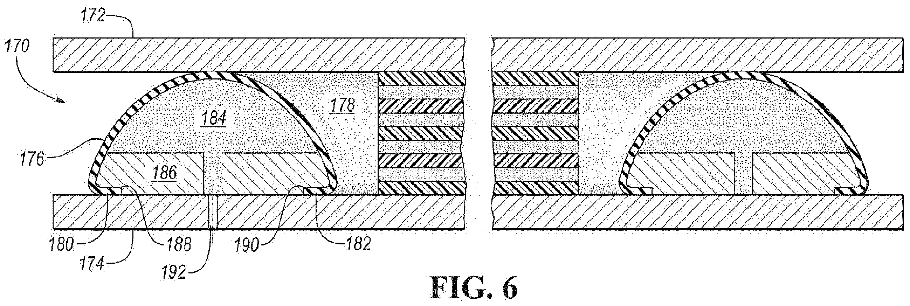

As shown in Figure 1, ply stack perimeter 32 is less than inner perimeter 34 of seal 18 to form a gap region therebetween. The gap region accommodates an increase in the perimeter from ply stack perimeter 32 into a perimeter of a thermoplastic composite during the embedding of the reinforcing fiber into the thermoplastic resin and the bulging of seal 18 during the embedding process that decreases inner perimeter 34 of seal 18 and increases outer perimeter 36 of seal 18. Alternatively, a seal may be employed that does not bulge during the process but instead undergoes some other change in configuration to adapt to a change in height (e.g., a bellowed seal or an inflatable seal). The gap region before embedding is configured such that a gap region is not eliminated after embedding to avoid contact between an edge region of the thermoplastic composite and seal 18. This contact may cause the thermoplastic composite to adhere to seal 18 at the edges, rendering the edges unusable. The unusable edges are trimmed as scrap. Moreover, this situation may render seal 18 unusable. The gap region before embedding may be minimized to create a uniform thickness of the thermoplastic composite while avoiding contact between the thermoplastic composite and seal 18. The gap region may cause first member 14 and/or second member 16 to cantilever because the gap region is not supported by ply stack 12. The cantilever or overhang may create a lack of uniformity in thickness of the thermoplastic composite. This edge region lacking uniformity may be scrapped when uniformity of thickness of the composite is desired. Support structure 42 may be located within the gap region between ply stack 12 and seal 18, or exterior from seal 18, or within a seal as shown in Figure 6. The height of support structure 42 may be positioned at about (e.g., slightly less or slightly more than) the targeted final thickness of the impregnated ply stack. Support structure 42 is configured to help minimize the cantilever effect by reducing the length of the cantilever (e.g., for several millimeters to less than one millimeter), thereby reducing scrap. Support structure 42 may be formed of a metal material such as aluminum.

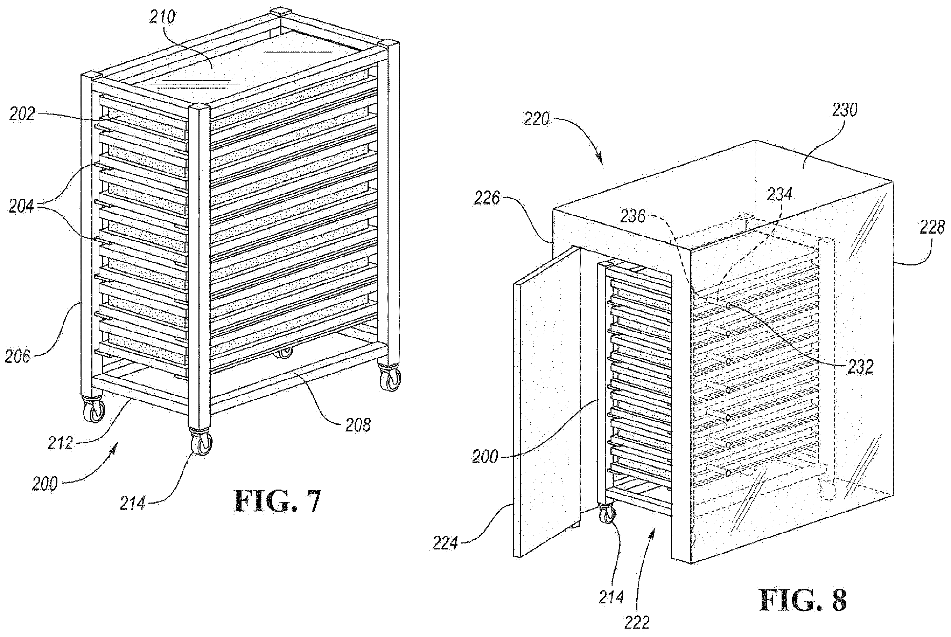

Cavity 10 also includes vacuum port 40 configured to receive a vacuum line (not shown). Vacuum port 40 may include an inner shoulder for receiving an end of vacuum line to create suction therebetween when a vacuum is applied within the vacuum line. Demolding or decoupling of the thermoplastic composite may include the introduction of positive air pressure into the vacuum sealed cavity through vacuum port 40 to reverse the pressure differential and separate the two members from the thermoplastic composite. The vacuum line is described in greater detail with respect to Figures 7 and 8 below.

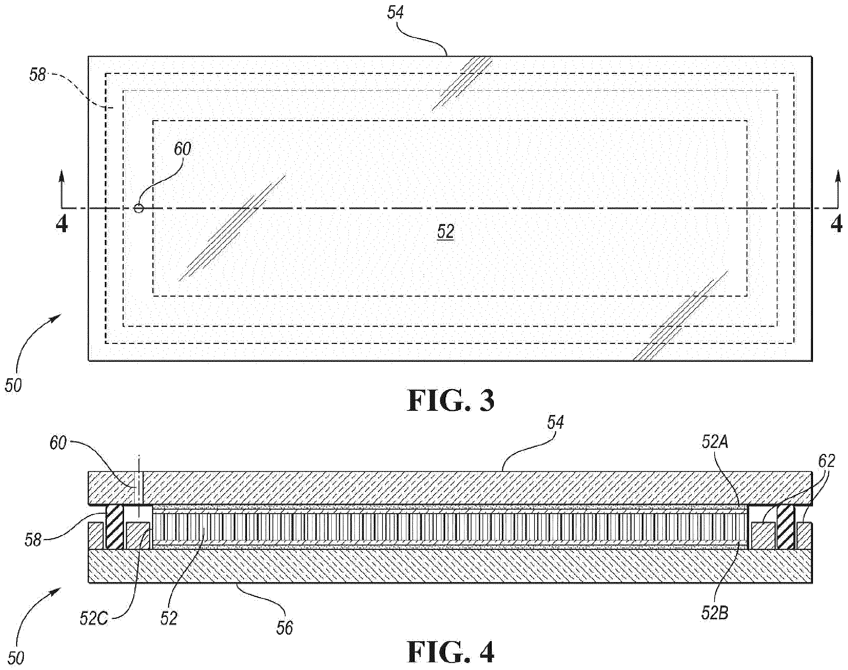

Figures 3 and 4 depict cavity 50 enclosing ply stack 52. Cavity 50 includes first member 54 formed of a first rigid, planar member, second member 56 formed of a second, rigid planar member, and seal 58 formed of a sealing material. Seal 58 may be suitable for ply stacks such as ply stack 52 including core material 52C because the seal does not have to compress as much as it does for implementations where the ply stack is formed of only alternating plies without a core material. Seal 58 may have a compression factor in a range of 1% to 30% whereas the bellowed seals and/or inflatable seals may have a compression factor in a range of 1% to 80%. Compression factor indicates the amount of compression as a percentage of the uncompressed height. Support structure 62 has a height about (e.g., slightly less or slightly higher than) the targeted final thickness of the impregnated ply stack. First member 54 and second member 56 may be formed of a monolithic material such as metal, glass (e.g., transparent glass) or ceramic. The monolithic metal material may be configured through machining on one side to optimize mass and performance and may have internal channels for heating and cooling. Alternatively, first and second members may also be constructed of multiple plates with internal heating/cooling channels stamped, machined, or etched into the plates and assembled using diffusion bonding or brazing. The overall thickness of a member may be 5 to 100 millimeters.

As shown in Figure 4, ply stack includes upper alternating plies 52A and lower alternating plies 52B and core material 52C extending therebetween. Core material 52C may be formed of a honeycomb or foam core material (e.g., metal, thermoplastic, paper, or thermoset). Each of upper alternating plies 52A and lower alternating plies 52B includes at least one thermoplastic resin ply formed of a thermoplastic resin and at least one reinforcing fiber ply formed of a reinforcing fiber (e.g., glass fiber). The ply stack may also include an adhesive ply against the core material. One of the at least one thermoplastic resin plies of upper alternating plies 52A may contact first member 54 and one of the at least one thermoplastic resin plies of lower alternating plies 52B may contact second member 56. Cavity 50 also includes vacuum port 60 configured to receive a vacuum line.

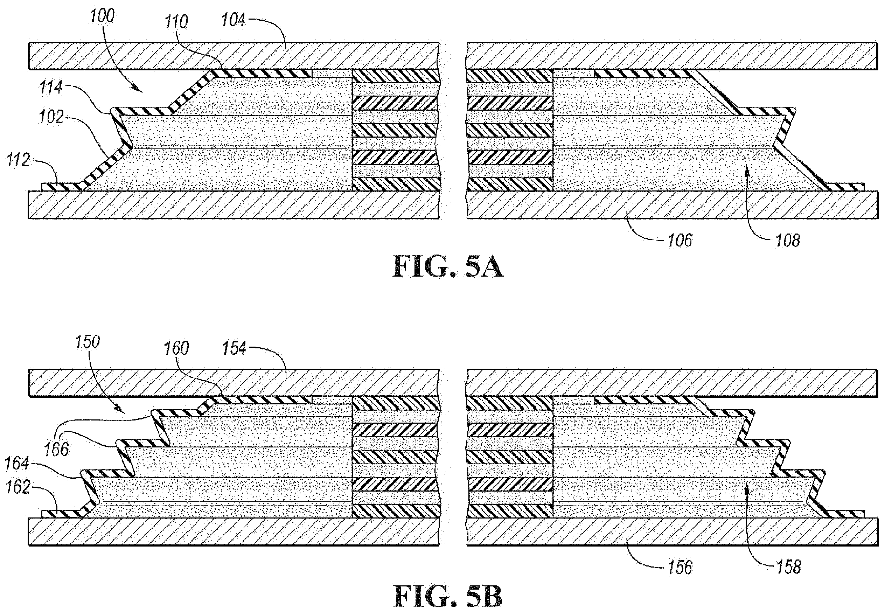

Figure 5A depicts a cross sectional view of seal 100. Seal 100 extends between first member 104 and second member 106 and around cavity 108 inward the perimeter of first member 104 and second member 106. First flat portion 110 or second flat portion 112 of seal 100 may be adhesively secured to first member 104 or second member 106, respectively. Angled portion 102 extends between first flat portion 110 and second flat portion 112 and includes bellow 114 which contributes to the structural integrity of the seal to maintain functionality under the applied pressure differential. Angled portion 102 is configured to flex from an uncompressed state to an initial compressed state when cavity 108 is subjected to a vacuum to form a vacuum-sealed cavity and to a final compressed state once the thermoplastic resin plies are fully impregnated into the reinforcing fiber plies. Bellow 114 is configured to provide structural strength to seal 100. Seal 100 is configured to compress its height by a compression factor (e.g., 1% to 80%).

Figure 5B depicts a cross sectional view of seal 150. Seal 150 extends between first member 154 and second member 156 and around cavity 158 inward the perimeter of first member 154 and second member 156. First flat portion 160 or second flat portion 162 of seal 150 may be adhesively secured to first member 154 or second member 156, respectively. Angled portion 164 extends between first flat portion 160 and second flat portion 162 and includes bellows 166. Angled portion 164 is configured to flex from an uncompressed state to an initial compressed state when cavity 158 is subjected to a vacuum to form a vacuum-sealed cavity and to a final compressed state once the thermoplastic resin plies are fully impregnated into the reinforcing fiber plies. Bellows 166 are configured to strengthen and reinforce seal 150. Seal 150 is configured to compress its height by a compression factor (e.g., 1% to 80%).

Figure 6 depicts a partial cross sectional view and a partial end view of inflatable seal 170. Seal 170 extends between first member 172 and second member 174 and around cavity 178 inward the perimeter of first member 172 and second member 174. Seal 170 includes arched portion 176 configured to contact first member 172. Arched portion 176 terminates at first and second flanges 180 and 182 extending inward into seal cavity 184. In another alternative, first and second flanges may extend outward seal cavity 184. Support structure 186 is positioned within cavity 184. Support structure 186 includes first and second reliefs 188 and 190 configured to receive first and second flanges 180 and 182, respectively. The bottom surface of support structure 186 may be adhesively or mechanically secured to second member 174. First and second flanges 180 and 182 may be adhesively or mechanically secured to second member 174 and/or support structure 186. The height of support structure 186 may be positioned at about (e.g., slightly less or slightly higher than) the targeted final thickness of the impregnated ply stack. Support structure 186 is configured to help minimize the cantilever effect identified herein, thereby reducing thickness variability at the margins of the ply stack and reducing scrap. Port 192 is configured to inlet a pressurized gas (e.g., 0.1 to 5 bar) into sealed cavity 184. Sealed cavity 184 is configured to compress when cavity 178 is subjected to a vacuum to form an initial compressed state against the initial height of the ply stack and to a final compressed state once the thermoplastic resin plies are fully impregnated into the reinforcing fiber plies of the ply stack. Seal 170 is configured to compress its height by a compression factor (e.g., 1% to 80%).

Figure 7 depicts rack 200 supporting cavities 202 supported by supports 204. Rack 200 includes left side 206 and right side 208, top 210 and bottom 212. Rack 200 may be formed of a metal material (e.g., steel or aluminum). As shown in Figure 7, there are seven (7) supports 204 configured to support seven (7) cavities 202. The number of supports may be from 1 to 200. One or both of left side 206 and right side 208 may include panels having openings configured to receive vacuum lines therethrough. The height of each of the openings may be 25 to 250 millimeters. Rack 200 may be supported on casters 214 configured for easy transport of rack 200 after it is loaded with cavities 202, each containing a ply stack. The width and length of rack 200 may be sized to accommodate the width and length of the cavities supported therein. The height of rack 200 may be sized to accommodate cavities 202 supported by supports 204 of rack 200. The height may be 1.0 to 15.0 feet.

Figure 8 depicts rack 200 placed in oven 220 through opening 222 defined by oven 220. Once rack 200 is placed in oven 220, door 224 is configured to rotate to a closed position from an open position. Oven 220 includes left side panel 226 and right side panel 228 and upper panel 230 extending therebetween. Right side panel 228 includes apertures 232 configured to receive vacuum lines 234 therethrough. The distal ends of vacuum lines 234 are configured to attach to vacuum ports 236 of cavities 202. The width, length, and height of oven 220 may be sized to accommodate the width, length and height of rack 200.

After rack 200 is placed in oven 220, vacuum lines 234 are connected to vacuum ports 236 of the sealed cavities 202, and a vacuum may be applied between the two, rigid, planar members to impart an impregnation pressure on each ply stack. The vacuum creates a pressure differential between the vacuum-sealed cavity and a region external to the vacuum-sealed cavity. The pressure differential may be 0.1 to 1.0 bar. The supported area of the member may include cantilevered areas outside the ply stack which are able to retain their planar geometry when subjected to the pressure differential of the vacuum. The rigidity of the members may be such that the localized deformations of member surfaces under load in contact with the ply stack are below 1 mm and deflections of any cantilevered areas are below 10 mm. In some embodiments the localized deformations of member surfaces in contact with the ply stack are below 0.050 mm. In other embodiments the deflections of any cantilevered areas of the members are below 5 mm. Support structures may be utilized to control and/or neutralize the deflection of the cantilevered areas and deformations of the members adjacent the perimeter of the ply stack during the process as the gap between the upper and lower members decreases as a result of the impregnation of the resin plies into the fiber plies. Such support structures may not engage the members until the ply stack approaches its final thickness. Self-supported cantilevered areas outside of the ply stack subjected to the pressure differential of the vacuum may contribute additional load to the ply stack thereby increasing the impregnation pressure beyond the magnitude of pressure differential. The supported area (e.g., including the area of the ply stack where the ply stack supports the members and the self-supported cantilevered areas outside of the ply stack) under vacuum (e.g., a perimeter inside the inner perimeter of the seal where the perimeter is projected on a flat plane) as a ratio of a surface area of the ply stack (e.g., the upper or lower surface of the ply stack) may be greater than or equal to 1. The average impregnation pressure is proportional to the ratio multiplied by the pressure differential. The impregnation pressure across the ply stack may be variable due to local deformations under load of the members across the ply stack and into any cantilevered areas that may be present. Therefore, in some embodiments, the term average impregnation pressure is used. When a ply stack is positioned between the two rigid, planar members, the pressure differential results in a pressure applied directly to the ply stack. If the area of the ply stack is equal to the supported area under vacuum between the two members, then pressure applied to the ply stack is the same as the pressure differential achieved by the vacuum. However, if the area of the ply stack is less than the supported area under vacuum, the pressure applied directly to the ply stack is intensified and is higher than the pressure differential.

In one or more methods disclosed herein, the vacuum is the sole source of impregnation pressure (e.g., no mechanical or external means of pressure is applied to the ply stack), aside from the static weight of the top member. However, these disclosed methods do not preclude the impregnation pressure being augmented by an external pressure (e.g., by mechanical or external means). For instance, the impregnation pressure may be augmented by applying a weight (e.g., a 1,000 pound steel block) on top of the members and/or by using a clamp to open and close the members. As the members may be heavy (e.g., 100 kilograms) for a relatively large area, a clamp system may be utilized to open and close the cavity created by the members for loading the ply stack and unloading the thermoplastic composite. The clamp may exert a relatively small amount of force onto the ply stack. In one or more methods, the vacuum may be the predominant source of impregnation pressure, while not precluding other sources of impregnation pressure (e.g., by mechanical or external means). Heated platens may be configured to apply heat locally to metal members through conduction to augment the impregnation pressure.

The method may also include ramping the vacuum level during the heating step. In one or more methods disclosed herein, the ply stack is heated to an impregnation temperature to impregnate a heated thermoplastic resin into the reinforcing fiber to form a heated composite while maintaining a seal temperature of the seal below the impregnation temperature of the thermoplastic resin.

In addition to removing entrapped air within the ply stack, the vacuum also facilitates the heating of the thermoplastic resin in the ply stack well above its normal processing temperature when processed in ambient conditions because the vacuum removes oxygen from the sealed environment thereby mitigating or preventing oxidation. This allows the embedding process to heat the thermoplastic resin significantly higher than otherwise practical to reduce the viscosity of the resin to a level at which it can permeate the fiber under the relatively low pressures achieved by the vacuum.

The heating step may be accomplished by placement of the sealed cavity within an oven or alternatively through heating integrated into the cavity members to heat the ply stacks. Such integrated heating may include electrical heating elements or internal channels through which steam or a heating fluid like oil is pumped to heat the individual ply stacks. The step of heating the ply stack may be carried out by an external hot plate or platen that applies heat directly to the metal members through conduction. Other non-limiting methods of heating the ply stack may include infrared heating of the metal members.

The heating step may include maintaining the seal temperature of the seal below the impregnation temperature of the thermoplastic resin during the heating step (e.g., one or more heating cycles) to protect the seal from degradation and reduction in lifespan. The seal may be formed of a thermoset or thermoplastic material. These seal materials may not tolerate the relatively high impregnation temperatures over repeated heating/impregnation cycles. The seal material may have a seal temperature limit that if exceeded by heating the seal to the impregnation temperature may degrade the seal or reduce its normal lifespan. One or more properties of the seal (e.g., shear strength, compression strength, or tensile strength) may degrade at the impregnation temperature to render the seal non-functional. Exceeding the seal temperature may also significantly or substantially reduce the seal's normal lifespan. The lifespan may refer to the number of heating cycles in which the seal is being used. A substantial reduction of lifespan may be measured in percentage reduction in lifespan. The percentage reduction in lifespan may be at least any of the following percentages or range of any two of the following percentages: 0.05, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, and 2.0 %. A substantial reduction of lifespan may be measured in a reduction of useful cycles. The reduced number of useful cycles may be at least any of the following numbers or in a range of any two of the following numbers: 1, 5, 10, 20, 30, 40, 50, 60, 70, 80, 90, 100, and 200.

Maintaining the seal temperature below the seal temperature limit and/or the impregnation temperature of the thermoplastic resin may be accomplished through active cooling and/or passive cooling of the seal during the heating step. Active cooling may be utilized where the seal is exposed to the same heating environment as used to heat the ply stack (e.g., inside an oven). As an example of active cooling, a cooling medium may flow adjacent the inner and/or outer sides of a solid or hollow seal (e.g., seals 18, 58, 100, 150, and/or 176). As another additional or alternative example of active cooling, the cooling medium may flow through a conduit of a solid seal or a cavity of hollow seal (e.g., through port 192 in communication with seal 170). For instance, the internal channels may be configured to facilitate active cooling of the seal during the heating step. Passive cooling may be utilized to separate or isolate the seal from the heating environment used to heat the ply stack. A non-limiting example of passive cooling is cooling the seal by ambient convection. Another non-limiting example is using an insulator to isolate the seal from the heating environment. Passive cooling may be applicable where localized heating is applied to the system directly above and/or below the ply stack through conductive heating. In one or more embodiments, the temperature differential between the ply stack material and the seal is adequate to provide adequate impregnation of the ply stack while protecting the seal from thermal degradation and premature end of life. For instance, the temperature differential may be any of the following temperatures or in a range of any two of the temperatures: 5, 6, 7, 8, 9, 10, 11, 12, 13, 14, 15, 16, 17, 18, 19, and 20 °C. As another example, the impregnation temperature (e.g., the temperature of the ply stack material) may reach 275 °C or higher while the seal temperature may remain at 270 °C or lower. As yet another example, the impregnation temperature may reach 280 °C or higher while the seal temperature may remain at 260 °C or lower. Active and passive techniques may be combined to create a protective environment for the seal.

The heating step may reduce the dynamic viscosity of the heated thermoplastic resin to below 1,000 Pa-s and in some embodiments below 500 Pa-s according to ISO 6721-10 when measured at an angular frequency of 0.01 rad/s. The heating step includes heating the vacuum-sealed cavity to an impregnation temperature to impregnate the heated thermoplastic resin at a melt volume rate of greater than 25 cm³/10 minutes according to ISO 1133-1 and measured using a test temperature equal to the impregnation temperature using a 2.16 kg nominal load. The impregnation temperature may be greater than a thermogravimetric analysis (TGA) onset temperature in air of the at least one thermoplastic resin ply using a heat rate of 0.1 °C/min. The embedding process may further include holding at the impregnation temperature for a holding period (e.g., 1 to 20 minutes).

By decoupling the process from expensive equipment needed for the application of pressure, the economic dependency on the time of the process is significantly reduced allowing for a wider time window to facilitate impregnation under the lower pressures. The system for implementing the process includes a vacuum pump and a method for heating the ply stack, sealed within the plates under vacuum, heating the materials to the desired impregnation temperature and holding the materials at that temperature for the desire dwell time to facilitate impregnation. Subsequently, the impregnated heated thermoplastic sheet can be cooled. A further benefit of one embodiment of the process is that a multitude of such cavities can be staged inside a common oven in a batch process that can produce 2 to 100 sheets at the same time resulting in a relatively high throughput from a very modest capital investment.

The components of the systems set forth herein may be actuated by a controller. The controller may include a processor that may be any suitable processing device or set of processing devices such as, but not limited to, a microprocessor, a microcontroller-based platform, an integrated circuit, one or more field programmable gate arrays (FPGAs), and/or one or more application-specific integrated circuits (ASICs). Memory may be in communication with the controller. The memory may be volatile memory (e.g., RAM including non-volatile RAM, magnetic RAM, ferroelectric RAM, etc.), non-volatile memory (e.g., disk memory, FLASH memory, EPROMs, EEPROMs, memristor-based non-volatile solid-state memory, etc.), unalterable memory (e.g., EPROMs), read-only memory, and/or high-capacity storage devices (e.g., hard drives, solid state drives, etc.). In some examples, the memory may include multiple kinds of memory, particularly volatile memory and non-volatile memory. The memory may be a computer readable media on which one or more sets of instructions such as the software for operating the methods of the present disclosure, can be embedded. The instructions may embody one or more of the methods or logic as described herein. For example, the instructions may reside completely, or at least partially, within any one or more of the memory, the computer readable medium, and/or within the controller during execution of the instructions.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A method of embedding a reinforcing fiber into a thermoplastic resin, the method comprising:
providing a sealed cavity defined by first and second metal members and a seal, the sealed cavity enclosing a ply stack, the ply stack including at least one thermoplastic resin ply including the thermoplastic resin and at least one reinforcing fiber ply including the reinforcing fiber;
subjecting the sealed cavity to a vacuum to form a vacuum cavity to impart an impregnation pressure on the ply stack;
heating the ply stack to an impregnation temperature of the thermoplastic resin to form a heated thermoplastic resin while maintaining a seal temperature of the seal below the impregnation temperature of the thermoplastic resin;
impregnating the heated thermoplastic resin into the reinforcing fiber to form a heated composite; and
cooling the heated composite to form a thermoplastic composite.

2. The method of claim 1, wherein the heating step includes heating the vacuum cavity to the impregnation temperature above a glass transition temperature of the thermoplastic resin to impregnate the heated thermoplastic resin at a melt volume rate of greater than 25 cm³/10 minutes according to ISO 1133-1 when measured using a test temperature equal to the impregnation temperature using a 2.16 kg nominal load,
and/or wherein the first and second metal members are first and second rigid metal members, respectively,
and/or wherein the subjecting step includes subjecting the sealed cavity to a vacuum to form a vacuum cavity having a supported area under vacuum imparting the impregnation pressure on a surface area of the ply stack less than the supported area under vacuum to produce an intensification effect resulting from a ratio of the supported area under vacuum to the surface area of the ply stack greater than 1.

3. The method of claim 1 or 2, wherein the first and second metal members include first and second planar surfaces, respectively,
and/or wherein the heating step includes heating the ply stack to the impregnation temperature of the thermoplastic resin to form the heated thermoplastic resin while maintaining the seal temperature of the seal below a seal temperature limit of the seal.

4. The method of any one of claims 1-3, wherein the impregnation temperature of the thermoplastic resin exceeds a temperature limit of the seal,
and/or wherein the vacuum creates a pressure differential of 0.1 to 1 bar between the vacuum cavity and a region external to the vacuum cavity, and an average impregnation pressure is proportional to the ratio multiplied by the pressure differential,
and/or wherein the impregnation temperature is 275 °C or higher and the seal temperature is 270 °C or lower.

5. The method of any one of claims 1-4, wherein the maintaining step is carried out using active cooling,
and/or wherein the maintaining step is carried out using passive cooling.

6. The method of any one of claims 1-5, wherein a temperature differential between the impregnation temperature and the seal temperature is at least 5 °C,
and/or wherein the at least one thermoplastic resin ply includes a nonwoven fabric of spunbond fibers, melt-blown fibers, needle-punched fibers, wet-laid fibers, or air-laid fibers.

7. The method of any one of claims 1-6, wherein the at least one thermoplastic resin ply includes at least one thermoplastic film,
and/or wherein the at least one reinforcing fiber ply includes a woven fabric, a non-crimp fabric, a non-woven fabric, or a binder stabilized fabric.

8. The method of any one of claims 1-7, wherein the reinforcing fiber includes a fiberglass, a carbon fiber, a mineral fiber, an organic fiber, a natural fiber, or a combination thereof,
and/or wherein the impregnation temperature is greater than a thermogravimetric analysis (TGA) onset temperature in air of the at least one thermoplastic resin ply using a heat rate of 0.1 °C/minute.

9. The method of any one of claims 1-8, wherein the impregnating step includes impregnating the heated thermoplastic resin into the reinforcing fiber to form a heated composite resulting from a height reduction between the first and second metal members of 20% to 80%,
and/or wherein the at least one thermoplastic resin ply includes first and second thermoplastic resin plies.

10. The method of any one of claim 1-9, wherein the at least one reinforcing fiber ply includes first and second reinforcing fiber plies,
and/or wherein the ply stack includes at least three alternating plies including the at least one reinforcing fiber ply and the at least one thermoplastic resin ply.

11. The method of any one of claim 1-10, further comprising holding at the impregnation temperature for a holding period of 1 to 60 minutes,
and/or wherein the impregnation pressure is augmented by an external pressure.

12. The method of any one of claim 1-11, wherein the heating step includes heating a plurality of the vacuum cavities in an oven,
and/or wherein a deflection of a cantilevered area of the sealed cavity during the subjecting step is supported by one or more support structures at some point during the process.

13. The method of any one of claims 1-12, wherein the seal is an inflatable tube, bladder, or section,
and/or wherein the ply stack includes at least one metal ply.

14. The method of any one of claims 1-13, wherein the subjecting step includes ramping up an applied vacuum during the heating step,
and/or wherein the vacuum cavity is subjected to a positive air pressure after a cooling cycle to open the vacuum cavity and separate the thermoplastic composite from one or both of the first and second metal members to remove the thermoplastic composite from the cavity.

15. A method of embedding a reinforcing fiber into a thermoplastic resin, the method comprising:
providing a sealed cavity defined by first and second metal members and a seal, the sealed cavity enclosing a thermoplastic prepreg partially impregnating the reinforcing fiber with the thermoplastic resin;
subjecting the sealed cavity to a vacuum to form a vacuum cavity to impart an impregnation pressure on the thermoplastic prepreg;
heating the thermoplastic prepreg to an impregnation temperature of the thermoplastic resin to form a heated thermoplastic resin while maintaining a seal temperature of the seal below the impregnation temperature of the thermoplastic resin;
impregnating the heated thermoplastic resin into the reinforcing fiber to form a heated composite; and
cooling the heated composite to form a thermoplastic composite.
